# EUROPÄISCHE PATENTSCHRIFT

(11) **EP 1 470 840 B1**
(45) Veröffentlichungstag und Bekanntmachung des Hinweises auf die Patenterteilung: **01.02.2006**
(21) Anmeldenummer: 04008825.4
(22) Anmeldetag: 14.04.2004
(51) Int. Cl.: A62C 3/08, G08B 17/00, B64D 47/00

(54) **Verfahren und Vorrichtung zur Erkennung auftretender Feuer in einem Flugzeug**
Fire detection method and device aboard an aircraft
Procédé et dispositif de détection d'un incendie à bord d'un aéronef

(30) Priorität: 26.04.2003 DE 10318976
(43) Veröffentlichungstag der Anmeldung: 27.10.2004
(73) Patentinhaber: Airbus Deutschland GmbH, 21129 Hamburg (DE)
(72) Erfinder: Bobenhausen, Axel, D-28759 Bremen (DE)
(74) Vertreter: Hansmann, Dierk

(56) Entgegenhaltungen:
- EP-A- 0 452 057
- EP-A- 1 239 432
- WO-A-99/14719
- GB-A- 2 376 706

## Beschreibung

Die Erfindung betrifft ein Verfahren und eine Vorrichtung zur Überwachung eines in einem vorzugsweise geschlossenen Raum eines Flugzeuges zur Erkennung auftretender Feuer, insbesondere in einem, mit Containern bzw. Paletten beladenen Frachtraum, vorzugsweise zur Unterstützung eines Feuer-verifikationssystems auf Video-/IR-Basis bzw. einer Videoüberwachung des Raumes.

Feuer-Verifikationssysteme für Frachträume in Flugzeugen befinden sich zur zeit in der Entwicklung und sind noch nicht im praktischen Einsatz. Die Algorithmen zur Informationsgewinnung, d. h. zur Bestimmung der Zustände "Feuer" oder "kein Feuer", müssen noch entwickelt und/oder auf ihre Gültigkeit überprüft werden. Somit werden schätzungsweise in den nächsten 2 bis 6 Jahren keine Feuer-verifikationssysteme für Flugzeugfrachträume existieren, die wesentlich mehr als ein Videobild eines Frachtraumes liefern. Eine Einschätzung der Situation im Frachtraum ist somit abhängig von der Interpretation des Frachtraumbildes durch die Piloten. Eine Präzisierung der Lage eines Feuers im Frachtraum ist fast nicht möglich; sie ist abhängig von der Anzahl der verwendeten Kameras und daher sehr kostenintensiv. Von Nachteil ist auch, daß beim Einsatz von CCD Kameras davon ausgegangen wird, daß infolge der Wellenabhängigkeit Temperaturen erst ab ca. 300°C sichtbar gemessen werden können.

In der DE-C1-39 17 205 ist eine Brandbekämpfungseinrichtung für Fracht- bzw. Passagierflugzeuge beschrieben. Diese Einrichtung besteht aus einer Feuerlöscheinheit, die in Flugzeuglängsrichtung verfahrbar gehaltert ist und die mit einer Antriebsvorrichtung ausgestattet ist. Eine Überwachungseinrichtung ermöglicht die Ansteuerung der Feuerlöscheinrichtung vom Cockpit des Flugzeuges aus. Die Halterung der Feuerlöscheinheit erfolgt über einen Wagen, der an einer fest mit der Struktur des Flugzeuges verbundenen Schiene geführt ist. An diesem Wagen ist die Feuerlöscheinheit schwenkbar gehaltert. Zusätzlich kann eine Videokamera vorgesehen und mit der Feuerlöscheinheit gekoppelt sein, wobei das Objektiv der Videokamera auf den Raumbereich gerichtet ist, der von der Löschkanone überstrichen wird.

Nach der EP-A 0 452 057 ist eine Anordnung zur Feuererkennung in einem mit Containern beladenen Frachtraum über Kontrolleinrichtungen bekannt. Hierbei sind Überwachungsgeräte mit Infrarotdedektoren zur Erfassung von Überhitzungen den Containern jeweils zugeordnet und geben ein Signal zur Kontrolleinrichtung.

Der Erfindung liegt nun die Aufgabe zugrunde, ein Verfahren der eingangs genannten Art zu schaffen, mit dem eine Früherkennung eines Feuers auch für Temperaturen, die wesentlich unterhalb von ca. 300°C liegen, ermöglicht wird. Ferner wird eine Vorrichtung zur Durchführung des Verfahrens vorgeschlagen.

Die Aufgabe wird durch die Verfahrensschritte gelöst, daß Streifen aus einem durch Hitzeeinwirkung aufschäumenden, volumenvergrößernden feuerfesten Material in einem Muster an der Decke des Raumes installiert werden und das Muster der Materialstreifen mittels eines Visualisierungssystems derart überwacht wird, wobei ein auftretendes Feuer aufgrund der Erhitzung eine Aufschäumung der Streifen durch das Visualisierungssystem erkannt und lokalisiert wird.

Zur Ausgestaltung des Verfahrens wird vorgeschlagen, daß die Materialstreifen aus dem aufschäumenden und feuerfesten Material oberhalb der Stellplatzpositionen der Container bzw. Paletten in einem spezifischen Muster an der Decke des Frachtraumes installiert werden, und daß durch Hitzeeinfluß bewirkte Änderungen der aufschäumenden und feuerfesten Materialstreifen von einem, die Container bzw. Paletten abtastenden Visualisierungssystem erfaßt werden.

zur Ausbildung einer Vorrichtung ist vorgesehen, daß die aufschäumenden und feuerfesten Materialstreifen eine Lichtquelle bzw. ein Target abdecken und Veränderungen aufgrund einer durch Hitzeeinfluß bewirkten Änderung der aufschäumenden und feuerfesten Materialstreifen von dem Visualisierungssystem erfaßbar sind.

Eine günstige Weiterbildung der Vorrichtung wird durch die verwendung einer Video-Kamera als Visualisierungssystem geschaffen.

Ferner wird zur Ausbildung der Vorrichtung vorgeschlagen, daß das aufschäumende und feuerfeste Material in Form eines Klebebandes ausgebildet ist.

Der wesentliche Vorteil der Erfindung besteht darin, daß beispielsweise bei der Verwendung eines unter dem Namen "Palusol" der Fa. BASF AG auf dem Markt befindlichen Streifenmaterials eine frühe Feuererkennung bei geringen Temperaturen von etwa 160°C ermöglicht wird, wobei auch eine Erkennung der Position des Feuers gegeben ist. Zusätzlich wird das Detektionsspektrum eines Feuer-Verifikationssystems für Flugzeugfrachträume im Bereich rauch-gasarmer Verbrennungen (mit der Hitze/Wärme-Entwicklung) ergänzt. Von Vorteil sind zudem die sofortige verfügbarkeit der Technologie bei geringen Kosten sowie ein geringer Installationsaufwand.

In der Zeichnung ist ein Ausführungsbeispiel der Erfindung schematisch dargestellt. Es zeigen:
- Fig. 1:: eine Prinzipdarstellung einer Anordnung zur Durchführung des Verfahrens in einem Frachtraum eines Flugzeuges in Draufsicht,
und
- Fig. 2:: eine prinzipielle Seitenansicht der Decke des Frachtraumes unter dem Blickwinkel einer Video-Kamera.

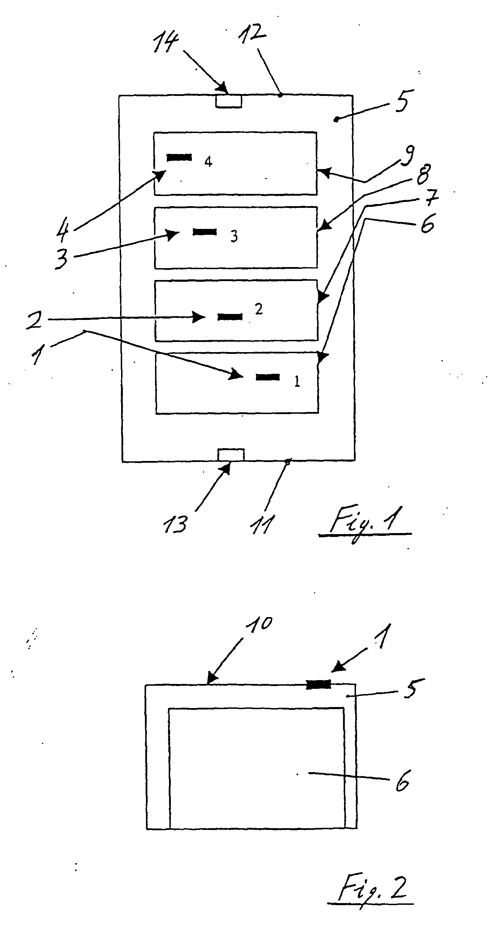

In Fig. 1 sind in einem Frachtraum 5 eines nicht näher dargestellten Flugzeuges vier Container 6, 7, 8 und 9 angeordnet. Oberhalb jedes Containers 6 bis 9 befindet sich ein, an der Decke 10 des Frachtraumes 5 befestigter Materialstreifen 1, 2, 3 und 4, wobei diese Materialstreifen in einem vorgegebenen Muster angeordnet sind. Die Anordnung der Materialstreifen 1 bis 4 oberhalb der Container 5 bis 9 ist für den Materialstreifen 1 aus Fig. 2 ersichtlich. Die Materialstreifen 1 bis 4 bestehen aus einem durch Hitzeeinwirkung aufschäumenden, volumenvergrößernden feuerfesten Material, z. B. dem oben erwähnten Material "Palusol" . An Stirnseiten 11 und 12 des Frachtraumes 5 ist jeweils ein, als visualisierungssystem dienender. Sensor 13 bzw. 14 wie eine Video- oder IR-Kamera angeordnet. Die Anordnung der Kameras 13, 14 oberhalb der Container 6 bis 9 ist derart gewählt, daß aus Kamera-Sicht auf die Positionen der Materialstreifen 1 bis 4 geschlossen werden kann. Das Muster der Materialstreifen 1 bis 4 wird mittels der als ein Visualisierungssystems wirkenden Kameras 13 und 14 derart überwacht, daß ein auftretendes Feuer aufgrund der Erhitzung und Aufschäumung der Materialstreifen 1, 2, 3 oder 4 durch das Visualisierungssystem erkannt und lokalisiert wird.

## Patentansprüche

1. verfahren zur Überwachung eines geschlossenen Raums eines Flugzeuges zur Erkennung auftretender Feuer, insbesondere in einem, mit Containern bzw. Paletten beladenen Frachtraum, vorzugsweise zur Unterstützung eines Feuer-Verifikationssystems auf Video-/IR-Basis bzw. einer Videoüberwachung des Raumes, **dadurch gekennzeichnet, daß** über Streifen (1, 2, 3, 4) aus einem durch Hitzeeinwirkung aufschäumenden volumenvergrößernden feuerfesten Material in einem. Muster an der Decke (10) des Raumes (5) installiert werden und das Muster der Materialstreifen (1 bis 4) mittels eines Visualisierungssystems (13, 14) derart überwacht wird, wobei ein auftretendes Feuer aufgrund der Erhitzung eine Aufschäumung der Streifen (1,2,3,4) durch das Visualisierungssystem (13, 14) erkannt und lokalisiert wird.

2. Verfahren nach Anspruch 1, **dadurch gekennzeichnet, daß** die Materialstreifen (1 bis 4) aus dem aufschäumenden und feuerfesten Material oberhalb der Stellplatzpositionen von Container (6, 7, 8, 9) bzw. Paletten in einem spezifischen Muster an der Decke (10) eines Frachtraumes (5) installiert werden, und daß durch Hitzeeinfluß bewirkte Änderungen der aufschäumenden und feuerfesten Materialstreifen (1 bis 4) von einem, die Container bzw. Paletten abtastenden visualisierungssystem (13, 14) erfaßt werden.

3. Vorrichtung zur Überwachung von Containern bzw. Paletten in geschlossenen Frachträumen (5) eines Flugzeuges mit Streifen (1 bis 4) aus durch Hitzeeinwirkung aufschäumenden feuerfesten Materialstreifen an der Decke eines Frachtraumes und einem zugeordneten Visualisierungssystem zur Erkennung und Lokalisierung, **dadurch gekennzeichnet, daß** die aufschäumenden und feuerfesten Materialstreifen (1 bis 4) eine Lichtquelle bzw. ein Target abdecken und deren Veränderungen aufgrund einer durch Hitzeeinfluß bewirkten Änderung der aufschäumenden und feuerfesten Materialstreifen (1 bis 4) von dem Visualisierungssystem (13, 14) erfaßbar sind.

4. Vorrichtung nach Anspruch 3, **gekennzeichnet durch** die verwendung einer Video-Kamera als Visualisierungssystem.

5. Vorrichtung nach einem der Ansprüche 3 oder 4, **dadurch gekennzeichnet, daß** das aufschäumende und feuerfeste Material (1 bis 4) in Form eines Klebebandes ausgebildet ist.

## Claims

1. Method of monitoring a closed compartment of an aircraft in order to detect an outbreak of fire, in particular in a freight compartment loaded with containers or pallets, preferably for assisting a fire verification system operated on a video/IR basis or video system for monitoring the compartment, **characterised in that** strips (1, 2, 3, 4) of a fire-resistant material which foams and increases in volume under the effect of heat are fitted in a pattern on the ceiling (10) of the compartment (5) and the pattern of material strips (1 to 4) is monitored by the display system (13, 14) so that an outbreak of fire is detected and located by the display system (13, 14) due to foaming of the strips (1, 2, 3, 4) caused by heat.

2. Method as claimed in claim 1, **characterised in that** the strips of material (1 to 4) of foaming and fire-resistant material are mounted above the stowage positions of containers (6, 7, 8, 9) or pallets in a specific pattern on the ceiling (10) of a freight compartment (5) and changes to the foaming and fire-resistant strips of material (1 to 4) due to the effect of heat are detected by a display system (13, 14) scanning the containers or pallets.

3. Device for monitoring containers or pallets in closed freight compartments (5) of an aircraft comprising strips of material (1 to 4) which are fire-resistant and foam under the effect of heat, disposed on the ceiling of a freight compartment, and a co-operating display system for detection and location purposes, **characterised in that** the foaming and fire-resistant strips of material (1 to 4) cover a light source or a target and changes to it due to a change in the foaming and fire-resistant strips of material (1 to 4) caused by heat can be detected by the display system (13, 14).

4. Device as claimed in claim 3, **characterised by** the use of a video camera as the display system.

5. Device as claimed in one of claims 3 or 4, **characterised in that** the foaming and fire-resistant material. (1 to 4) is provided in the form of an adhesive tape.

## Revendications

1. Procédé de surveillance d'un espace clos d'un aéronef afin de détecter la naissance d'un incendie, en particulier dans un espace de fret chargé de containers ou de palettes, de préférence en assistance d'un système de vérification d'incendie à base de rayons infrarouges et de vidéo c'est-à-dire un système de surveillance vidéo de l'espace, **caractérisé en ce que** des bandes (1, 2, 3, 4) faites d'une matière résistant au feu mais dont le volume s'accroît parce qu'elle se transforme en mousse par l'action de la chaleur, sont installées selon un modèle au plafond (10) de l'espace (5), et ce modèle de bandes de matière (1 à 4) est surveillé par un système de visualisation (13, 14) de manière que la naissance d'un incendie est détectée du fait de la transformation en mousse des bandes (1, 2, 3, 4) sous l'effet de la chaleur, et localisée.

2. Procédé selon la revendication 1, **caractérisé en ce que** les bandes (1 à 4) en matière réfractaire qui se transforme en mousse sont installées au-dessus des places où sont positionnés des containers (6, 7, 8, 9) ou des palettes, selon un modèle spécifique, au plafond (10) d'un espace de fret (5) et les variations, se produisant sous l'action de la chaleur, des bandes (1 à 4) en matière réfractaire se transformant en mousse sont détectées par un système de visualisation (13, 14) qui explore les containers ou les palettes.

3. Dispositif de surveillance de containers ou de palettes dans des espaces de fret (5) fermés d'un aéronef, qui comporte des bandes (1 à 4) en matière réfractaire se transformant en mousse sous l'effet de la chaleur, disposées au plafond d'un espace de fret, ainsi qu'un système de visualisation associé pour détecter et localiser l'incendie, **caractérisé en ce que** les bandes (1 à 4) en matière réfractaire qui se transforme en mousse recouvrent une source de lumière ou un déclencheur dont les variations dues à la modification par l'effet de la chaleur des bandes (1 à 4) en matière réfractaires qui se transforment en mousse, peuvent être saisies par le système de visualisation (13, 14).

4. Dispositif selon la revendication 3, **caractérisé en ce qu'**une vidéo-caméra est utilisée comme système de visualisation.

5. Dispositif selon la revendication 3 ou 4, **caractérisé en ce que** la matière réfractaire se transformant en mousse est utilisée sous la forme d'une bande adhésive.
